# EUROPEAN PATENT SPECIFICATION

(11) **EP 3 105 996 B1**
(45) Date of publication and mention of the grant of the patent: **04.04.2018**
(21) Application number: 15702426.6
(22) Date of filing: 27.01.2015
(51) Int. Cl.: F21V 21/14, F21Y 115/10, H05B 33/08

(54) **ILLUMINATION SYSTEM COMPRISING AN ARRAY OF LEDS**
BELEUCHTUNGSSYSTEM MIT LED-ARRAY
SYSTÈME D'ÉCLAIRAGE COMPRENANT UN RÉSEAU DE DEL

(30) Priority: 12.02.2014 EP 14154847
(43) Date of publication of application: 21.12.2016
(73) Proprietor: Philips Lighting Holding B.V., 5656 AE Eindhoven (NL)
(72) Inventor: SEMPEL, Adrianus, NL-5656 AE Eindhoven (NL); VAN DEN BIGGELAAR, Theodorus Johannes Petrus, NL-5656AE Eindhoven (NL)
(74) Representative: Verweij, Petronella Daniëlle
(86) International application number: PCT/EP2015/051531
(87) International publication number: WO 2015/121054

(56) References cited:
- WO-A1-02/31406
- WO-A2-2009/153715
- US-A- 5 463 280
- US-A1- 2012 049 640

## Description

### FIELD OF THE INVENTION

The present invention relates in general to the field of lighting, and more particularly the present invention relates to a lighting system comprising an array of LEDs, wherein the LEDs are connected to a series capacitor.

### BACKGROUND OF THE INVENTION

For powering a LED panel, comprising an array of LEDs, it is traditionally possible to transfer electric power from a source to the LEDs via wires, but this is rather complicated and expensive. Further, for illumination purposes it is typically desirable that all LEDs have mutually the same light output, but it is complicated to achieve this in a wired embodiment. It is to be noted that the individual LED components do not necessarily have mutually identical characteristics: manufacturing tolerances will cause one LED to be brighter than the other, and this difference should be eliminated as much as possible.

US 2012/049640 A1 discloses a wireless power transmission system for achieving enhanced power transmission efficiency.

In an alternative design, the LEDs are, either individually or as a group, provided with series capacitors for limiting the LED current. Tolerances in these series capacitors will cause variations in the light output between LEDs, and for compensation additional capacitors can be used. US-7830095 describes a system where such LEDs are provided with a plurality of mutually parallel capacitors, each capacitor provided with a switch, so that it is possible to adapt the series capacitance value by selectively making or braking one or more of these switches. A problem is, however, that the capacitance variations, and hence the LED current and hence the LED output, can only be varied stepwise. Further, for precise compensation, many trimming capacitors with many corresponding switches are needed, which is expensive, and this problem increases with increasing spread of the LEDs and/or increasing spread of the series capacitors.

In case resonant powering is used, a supply device comprises an AC power generator for generating AC power, and at least one inductor coupled in series with respective series capacitors for the respective LEDs or groups of LEDs. It should be clear to a person skilled in the art that in such case the impedance of the LED array as a whole, and the resonance frequency of the LED array as a whole, will vary with the capacitance variations.

### SUMMARY OF THE INVENTION

A general objective of the present invention is to eliminate or at least reduce the above-mentioned problems.

According to an important aspect of the present invention, a lighting system according to the present invention comprises a carrier device with at least one active surface provided with capacitive electrodes. The system further comprises at least one, but typically a plurality, of sub-modules which on the one hand comprise capacitive electrodes for coupling with the carrier device electrodes, and which on the other hand comprise at least one LED. The sub-modules are placed on the carrier. For trimming the light output of the LEDs, the sub-modules are displaced over the carrier surface to vary the capacitive coupling between the sub-modules and the carrier device. The displacement may be a two-dimensional displacement; advantageously, when it is desired that the positions of the sub-modules as a whole remain constant, the sub-modules may be rotated. When the relative positions of the sub-modules are correct, the sub-modules are fixed with respect to the carrier, for instance by gluing or clamping.

To avoid the need to adjust the output frequency of the power source, the frequency of the power source is preferably swept in a frequency range large enough such as to assure that the actual resonance frequency of the array lies within the frequency range. In such way, it is assured that the resonant current is always generated during at least a portion of the frequency sweep period.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Fig. 1 is a block diagram schematically illustrating a capacitive driving system;
Fig. 2A is a schematic perspective top view of a supply device for a capacitive driving system according to the present invention;
Fig. 2B is a schematic block diagram of a load module for a capacitive driving system according to the present invention;
Fig. 2C is a schematic perspective bottom view of the load module;
Fig. 3 is a graph illustrating frequency sweeping.

### DETAILED DESCRIPTION OF THE INVENTION

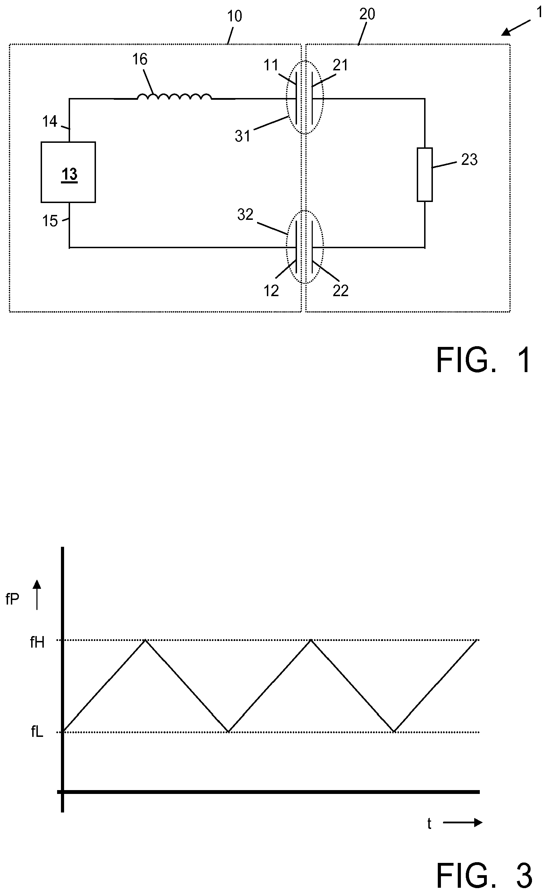

Figure 1 is a block diagram schematically illustrating a capacitive driving system 1, comprising a supply device 10 and a separate load device 20. In the illustrative example, the supply device 10 comprises two plate-shaped transmission electrodes 11, 12, which can be considered as output terminals. The supply device 10 further comprises a power generator 13 for generating AC power. A first output terminal 14 of the supply device 10 is connected to a first one 11 of the transmission electrodes, while a second output terminal 15 of the supply device 10 is connected to a second one 12 of the transmission electrodes. At least one inductor 16 is connected in series between the supply device 10 and the transmission electrodes 11, 12.

The load device 20 comprises at least one load member 23 connected in series in between a first plate-shaped receiver electrode 21 and a second plate-shaped receiver electrode 22. The load member 23 is depicted as a resistor, and may ideally have ohmic characteristics.

The transmission electrodes 11, 12 are located close to an outer surface 17 of the supply device 10, and the receiver electrodes 21, 22 are located close to an outer surface 27 of the load device 20. The disposition of the receiver electrodes 21, 22 matches the disposition of the transmission electrodes 11, 12, so that the load device 20 and the supply device 10 can be placed in close proximity of each other in an energy transfer position in which the first transmission electrode 11 together with the first receiver electrode 21 defines a first transfer capacitor 31 while simultaneously the second transmission electrode 12 together with the second receiver electrode 22 defines a second transfer capacitor 32.

The inductor 16 together with the capacitors 31 and 32 define a resonance circuit having a resonance frequency, and the power generator 13 is designed to generate an AC output signal at said resonance frequency, so that the circuit operates in resonance and power is efficiently transferred from the power generator 13 to the load member 23.

The precise actual capacitance value of the transfer capacitors 31, 32 depends on the circumstances of the precise actual placement of the load device 20. A displacement of the load device 20 with respect to the supply device 10 will result in variation of the actual capacitance value of the transfer capacitors 31, 32, and thus a variation in the power transferred to the load member 23. The present invention uses this effect to advantage. The present invention already comes into expression with a single load member 23, and the load member 23 may be any type of load. However, in a specifically advantageous embodiment, a capacitive driving system 100 comprises a plurality of load devices 20, and each load device 20 comprises one or more LEDs, and in the following the invention will be explained specifically for this example.

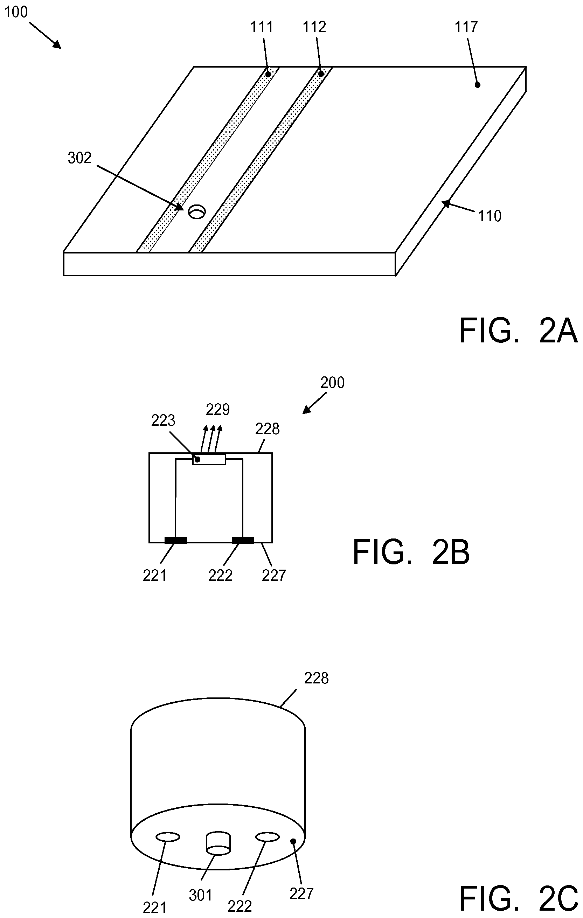

Figure 2A is a schematic perspective top view of a supply device 110 for the capacitive driving system 100 according to the present invention. The supply device 110 may be identical to the supply device 10 as described above. A top surface is indicated at 117. At the top surface 117, a pattern is arranged of transmission electrodes 111, 112. In the example of Figure 2A, the transmission electrodes 111, 112 are implemented as elongate strips, mutually parallel, having a certain predetermined width and a certain predetermined mutual distance. Only one pair of electrodes is shown, but the top surface 117 may be provided with multiple such pairs, depending on the size of the top surface 117, as should be clear to a person skilled in the art.

Figure 2B is a schematic block diagram of a load module 200, and Figure 2C is a schematic perspective bottom view of the load module 200. The load module has a lower surface 227 and an opposite top surface 228. At the top surface 228, a LED load 223 is arranged. The LED load 223 may be arranged on the top surface 228, but may also be arranged recessed in the top surface 228. The LED load 223 may contain just one single LED, but the LED load 223 may also comprise an array of two or more LEDs, which LEDs may be electrically connected in series, in parallel, or antiparallel, or a combination thereof, and which LEDs may be arranged distributed over the top surface 228. Similar as in Figure 1, two receiver electrodes 221, 222 are located close to the lower surface 227. The receiver electrodes 221, 222 may have a circular shape, as shown, with a diameter equal to the width of the transmission electrodes strips 111, 112, but the precise shape and size is not essential. The receiver electrodes 221, 222 may have a mutual distance equal to the mutual distance of the transmission electrodes strips 111, 112, but the precise mutual distance is not essential.

For use, the load module 200 is placed on the top surface 117 of the supply device 110, with its lower surface 227 contacting the top surface 117 of the supply device 110. This contact may be direct, but it may also be that a thin separate dielectric separation layer (not shown) is located between the load module 200 and the supply device 110, in which case the contact is indirect. The contact area does not have to be of the same size as the lower surface 227 of the load module 200: it is for instance possible that a dielectric separation layer has holes so that at that position there is an air gap between the load module 200 and the supply device 110.

In an embodiment, the system 100 comprises just one single load module 200. In another embodiment, the surface area of top surface 117 of the supply device 110 is substantially larger than the footprint of a load module 200, and the system 100 comprises multiple load modules 200 arranged on the top surface 117 of the supply device 110, next to each other. With only one pair of transmission electrodes strips 111, 112 as shown in Figure 2A, the multiple load modules 200 will substantially be arranged along this pair. To allow having multiple load modules 200 in a direction perpendicular to said one pair of transmission electrodes strips 111, 112, the top surface 117 of the supply device 110 may be provided with multiple pairs of transmission electrodes strips 111, 112, but this is not illustrated for sake of simplicity.

The general light output direction of the system 100 will be substantially perpendicular to the top surface 117 of the supply device 110. The supply device 110 may be used in the orientation shown in the figures, for directing output light upwards. However, the supply device 110 may also be used in an upside-down orientation, for directing output light downwards, or in a vertical direction for directing output light in a horizontal direction. For making the load modules 200 stick to the supply device 110 irrespective of the orientation thereof, the load modules 200 and the supply device 110 may be provided with sticking means. Such sticking means may for instance be electrostatic or electromagnetic, but in a simple embodiment the sticking means may comprise magnets.

In an embodiment, the load modules 200 may have a displacement freedom in two dimensions (X-Y) parallel to the top surface 117 of the supply device 110. When a load module is so displaced, the amount of light output will generally vary with the displacement, unless the displacement is precisely parallel to the pair of transmission electrodes strips 111, 112.

Such displacement freedom, in which the load modules 200 are displaced over the top surface 117 of the supply device 110, results in displacement of the spots where the load modules generate light. This may be a desirable effect, for esthetic purposes. However, it may also be desirable that the light spots are positionally fixed. In a particularly preferred embodiment, the load modules 200 and the supply device 110 are provided with rotary positioning means 300. Such positioning means prevent a displacement along X- and Y-directions, but allow a rotary movement around a rotary axis perpendicular to the top surface 117 of the supply device 110. As an example, in Figure 2C the load module 200 has a positioning pin 301 projecting from its lower surface 227 while the top surface 117 of the supply device 110 is provided with positioning recesses 302 (only one being shown for sake of simplicity) into which such positioning pin 301 fits. Obviously, pins and recesses may be interchanged, but this is not illustrated for sake of simplicity.

Again, it may be intended that the user varies the light output per light spot to obtain a desired light spot pattern, and to change that pattern at will. For such embodiment, the system may again have sticking means as described above. It is also possible that it is intended to provide a light panel with fixed properties, where the displacement of the load modules 200 is only needed once on manufacturing or on installing the system, for instance for trimming the load modules 200 such that their light outputs are mutually identical. In such case, after setting the load modules 200 in their final positions, these positions may be fixated, for instance by a drop of glue, or by a mechanical clamp, or by a screw.

In the example of Figures 2A-C, the positioning pin 301 is shown symmetrically between the two receiver electrodes 221, 222 while the positioning recesses 302 is shown symmetrically between the two transmission electrodes 111, 112. In such condition, rotation of the load module 200 will cause simultaneous variation of the capacitance values of both of said first and second transfer capacitors 31, 32. However, the positioning of the load modules 200 does not have to be symmetrical with respect to the transmission electrodes 111, 112, and the variation of the capacitance values of the first and second transfer capacitors 31, 32 does not have to be symmetrical. It is therefore even possible that the rotary axis coincides with one of the receiver electrodes 221, 222 such that the corresponding transfer capacitors keeps a constant capacity. It is further noted that, for capacitive energy transfer, it suffices if one of the two receiver electrodes 221, 222 defines a transfer capacitor with the corresponding transmission electrode: the other electrode may have a galvanic contact with the corresponding transmission electrode. Also, for instance, in Figure 2C pin 301 may be a galvanic contact electrode, and electrode 222 may be omitted or connected in parallel to electrode 221.

In embodiments having one galvanic contact and one capacitive contact, it will be advantageous if the power generator 13 has one output terminal (for instance 15) connected to ground, while that grounded terminal would be connected to the capacitive output contact and the non-grounded output terminal would be connected to the galvanic contact.

In the above, varying the capacitance of a capacitive coupling is explained in the context of a varying electrode overlap when a load module is displaced. However, as an alternative or as an addition, it is also possible to vary capacitance by varying the electrode distance. In embodiments like the one illustrated in Figure 2C, where the load module is rotated, it is possible that the pin 301 is threaded and that the corresponding recess 302 has a matching thread. In such case, screwing the load module clockwise or counter-clockwise will increase or decrease the electrode distance. Advantageously, the pin 301 would be a galvanic contact.

When varying the positions of the load modules 200 to vary the light output of such modules, the operational capacitance of the entire load system changes, and consequently, when the power source of the supply device 110 operates at a constant frequency, the power transfer to the entire load system changes, which would not only affect the light output of the load modules 200 whose positions are being changed but also the light output of the load modules 200 which remain stationary. To counteract this, it would be possible to (manually) vary to frequency of the power source to find the new optimum frequency belonging to the new positional setting of the load modules 200. In a preferred embodiment, however, the power source is adapted to sweep its frequency within a frequency range between a predefined lower border frequency fL and a predefined upper border frequency fH. Figure 3 is a graph showing output frequency (vertical axis) as a function of time (horizontal axis) in an example of a possible frequency sweep pattern. The exemplary pattern is a triangular pattern; alternative examples are a sawtooth pattern, a sine pattern, etc. Such patterns are known per se and need no further explanation. It should be clear that, within the repetition time period of the sweep pattern, and assuming that the optimum frequency is located between said two border frequencies, the output frequency becomes equal to the optimum frequency at least once. The repetition frequency is preferably higher than 100 Hz such that the sweeping is not perceived by a human observer.

Summarizing, the present invention provides a capacitive driving system that comprises:
- a supply device 110 having a set of transmission electrodes 111, 112 located at a top surface 117, and a power generator 13 adapted to generate alternating electrical power;
- load devices 200 each having two receiver electrodes 221, 222 at a lower surface 227 and at least one load member 223 coupled to said receiver electrodes.

In an energy transfer position, the lower surface of the load device is directed to the top surface of the supply device and at least one of said transmission electrodes together with a corresponding one of said receiver electrodes defines a first transfer capacitor 31. Resonant energy transfer takes place from the supply device to the load member. The load device can be rotated for enabling amendment of the capacitance value of said first transfer capacitor.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

For instance, while the design of the transmission electrodes 111, 112 is exemplary shown as elongate strips, the electrodes may also have a different design. For instance, the transmission electrodes may be designed as radial electrodes with respect to a positioning pen or recess 302, or as spiral-shaped electrodes spiraling around a positioning pen or recess 302. Furthermore, while the top surface 117 of the supply device 110 is discussed as being a flat surface, it may alternatively be a curved surface.

In the above, the two receiver electrodes 221, 222 of the load module 200 are described as being fixed with respect to the lower surface 227 of the load module 200. In such case, variation of the coupling capacitance is obtained by displacing the load module as a whole with respect to the top surface 117 of the supply device 110. It is however also possible that at least one of said two receiver electrodes 221, 222 of the load module 200 is displaceable with respect to the lower surface 227 of the load module 200. In such case, variation of the coupling capacitance can be obtained even if the load module 200 is kept fully stationary with respect to the supply device 110, namely by displacing the displaceable electrode(s) with respect to the lower surface 227 of the load module 200 and hence with respect to the transmission electrode(s) 111, 112.

## Claims

1. Capacitive driving system (100), comprising:
- a supply device (110) having a top surface (117), the supply device (110) comprising at least one set of transmission electrodes (111, 112) located at said top surface (117), and a power generator (13) having two output terminals (14, 15) coupled to respective ones of the transmission electrodes (111, 112), wherein the power generator (13) is adapted to generate electrical power having at said output terminals (14, 15) alternating voltage at a certain power frequency (fP);
- at least one load device (200) having a lower surface (227), the load device (200) comprising two receiver electrodes (221, 222) at said lower surface (227) and at least one load member (223) coupled to said receiver electrodes (221, 222);
wherein the supply device (110) and the load device (200) have an energy transfer position in which the lower surface (227) of the load device (200) is directed to the top surface (117) of the supply device (110) and in which at least one of said transmission electrodes (111) together with a corresponding one of said receiver electrodes (221) defines a first transfer capacitor (31);
wherein, in the energy transfer position, resonant energy transfer takes place from the supply device (110) to the load member (223);
and wherein, in the energy transfer position, at least said corresponding one receiver electrode (221) has a displacement freedom with respect to the corresponding transmission electrode (111) for enabling amendment of the capacitance value of said first transfer capacitor (31),
**characterized in that** the load device is an illumination load device and said load member comprises at least one LED,
wherein the load device (200) as a whole has a displacement freedom in at least one direction parallel to the top surface (117) of the supply device (110) for enabling amendment of the capacitance value of said first transfer capacitor (31), and
wherein the capacitive driving system is provided with rotary positioning means (301, 302) that are adapted to prevent shifting the respective load devices (200) along the top surface (117) of the supply device (110) but to allow a rotary movement of the respective load devices (200) around a rotary axis perpendicular to the top surface (117) of the supply device (110).

2. Capacitive driving system according to claim 1, comprising a plurality of load devices (200) arranged next to each other on the top surface (117) of the supply device (110).

3. Capacitive driving system according to claim 1, wherein the load member comprises an array of LEDs arranged in parallel to each other and/or in series to each other and/or anti-parallel to each other.

4. Capacitive driving system according to claim 1, wherein each load device (200) has a positioning pin (301) projecting from its lower surface (227) while the top surface (117) of the supply device (110) is provided with positioning recesses (302) for receiving the respective positioning pins (301) of the respective load devices (200), or wherein each load device (200) has a positioning recess in its lower surface (227) while the top surface (117) of the supply device (110) is provided with projecting positioning pins for receiving the respective positioning recesses of the respective load devices (200).

5. Capacitive driving system according to claim 1, wherein displacement of said corresponding one receiver electrode (221) effects a variation in overlap with the corresponding transmission electrode (111) thus amending the capacitance value of said first transfer capacitor (31), and/or wherein displacement of said corresponding one receiver electrode (221) effects a variation in distance between said corresponding one receiver electrode (221) and the corresponding transmission electrode (111) thus amending the capacitance value of said first transfer capacitor (31).

6. Capacitive driving system according to claim 1, wherein at least one of said two receiver electrodes (221, 222) of the load module (200) is displaceable with respect to the lower surface (227) of the load module (200).

7. Capacitive driving system according to claim 1, wherein the other receiver electrode (222) is capacitively coupled to its corresponding transmission electrode (112) or is galvanically coupled to its corresponding transmission electrode (112).

8. Capacitive driving system according to claim 1, wherein the supply device (110) is adapted to sweep the power frequency (fP) of the power generator (13) within a frequency range between a predefined lower border frequency (fL) and a predefined upper border frequency (fH).

9. Method for adapting the light output of an illumination load device (200) in a capacitive driving system, the capacitive driving system comprising a supply device (110) having a top surface (117), the supply device (110) comprising at least one set of transmission electrodes (111, 112) located at said top surface (117), and a power generator (13) having two output terminals (14, 15) coupled to respective ones of the transmission electrodes (111, 112), wherein the power generator (13) is adapted to generate electrical power having at said output terminals (14, 15) alternating voltage at a certain power frequency (fP),
the method comprising the step of displacing, with respect to the supply device (110), the illumination load device (200), the illumination load device (200) having a lower surface (227) comprising two receiver electrodes (221, 222) and further comprising at least one load member (223), coupled to said receiver electrodes (221, 222), the at least one load member comprising an array of LEDs arranged in parallel to each other and/or in series to each other and/or anti-parallel to each other,
wherein the illumination load device (200) is displaced with respect to the supply device (110) while in an energy transfer position in which the lower surface (227) of the illumination load device (200) is directed to the top surface (117) of the supply device (110) and in which at least one of said transmission electrodes (111) together with a corresponding one of said receiver electrodes (221) defines a first transfer capacitor (31),
wherein, in the energy transfer position, resonant energy transfer takes place from the supply device (110) to the load member (223);
and wherein the displacement of at least said corresponding one receiver electrode (221) with respect to the corresponding transmission electrode (111) enables amendment of the capacitance value of said first transfer capacitor (31),
**characterized in that** the step of displacing the illumination load device (200) with respect to the supply device (110), comprises rotating the illumination load device (200) with respect to the supply device (110).

## Patentansprüche

1. Kapazitives Ansteuerungssystem (100), das Folgendes umfasst:
- eine Versorgungsvorrichtung (110), die eine obere Fläche (117) aufweist, wobei die Versorgungsvorrichtung (110) mindestens einen Satz Übertragungselektroden (111, 112) umfasst, die sich auf der oberen Fläche (117) befinden, und einen Stromgenerator (13), der zwei Ausgangsanschlüsse (14, 15) aufweist, die an jeweilige der Übertragungselektroden (111, 112) gekoppelt sind, wobei der Stromgenerator (13) angepasst ist, elektrischen Strom zu erzeugen, der an den Ausgangsanschlüssen (14, 15) eine Wechselspannung mit einer bestimmten Stromfrequenz (fP) aufweist;
- mindestens eine Lastvorrichtung (200) mit einer unteren Fläche (227), wobei die Lastvorrichtung (200) zwei Empfängerelektroden (221, 222) an der unteren Fläche (227) und mindestens ein Lastelement (223), das an die Empfängerelektroden (221, 222) gekoppelt ist, umfasst;
wobei die Versorgungsvorrichtung (110) und die Lastvorrichtung (200) eine Energietransferposition aufweisen, in der die untere Fläche (227) der Lastvorrichtung (200) zur oberen Fläche (117) der Versorgungsvorrichtung (110) gerichtet ist und in der mindestens eine der Übertragungselektroden (111) zusammen mit einer entsprechenden der Empfängerelektroden (221) einen ersten Transferkondensator (31) definiert;
wobei in der Energietransferposition ein Resonanzenergietransfer von der Versorgungsvorrichtung (110) zum Lastelement (223) erfolgt
und wobei in der Energietransferposition mindestens die entsprechende eine Empfängerelektrode (221) eine Versatzfreiheit mit Bezug auf die entsprechende Übertragungselektrode (111) aufweist, um eine Änderung des Kapazitätswerts des ersten Transferkondensators (31) zu ermöglichen,
**dadurch gekennzeichnet, dass** die Lastvorrichtung eine Beleuchtungslastvorrichtung ist und das Lastelement mindestens eine LED umfasst,
wobei die Lastvorrichtung (200) als Ganzes eine Versatzfreiheit in mindestens eine Richtung parallel zur oberen Fläche (117) der Versorgungsvorrichtung (110) aufweist, um eine Änderung des Kapazitätswerts des ersten Transferkondensators (31) zu ermöglichen, und
wobei das kapazitive Ansteuerungssystem mit Rotationspositionierungsmitteln (301, 302) versehen ist, die angepasst sind, es zu verhindern, dass die entsprechenden Lastvorrichtungen (200) entlang der oberen Fläche (117) der Versorgungsvorrichtung (110) verschoben werden, aber eine Rotationsbewegung der jeweiligen Lastvorrichtungen (200) um eine Rotationsachse zu erlauben, die senkrecht zur oberen Fläche (117) der Versorgungsvorrichtung (110) verläuft.

2. Kapazitives Ansteuerungssystem nach Anspruch 1, das eine Vielzahl von Lastvorrichtungen (200) umfasst, die auf der oberen Fläche (117) der Versorgungsvorrichtung (110) nebeneinander angeordnet sind.

3. Kapazitives Ansteuerungssystem nach Anspruch 1, wobei das Lastelement ein Array von LEDs umfasst, die parallel zueinander und/oder in Reihe zueinander und/oder antiparallel zueinander angeordnet sind.

4. Kapazitives Ansteuerungssystem nach Anspruch 1, wobei jede Lastvorrichtung (200) einen Positionierungsstift (301) aufweist, der von ihrer unteren Fläche (227) vorsteht, während die obere Fläche (117) der Versorgungsvorrichtung (110) mit Positionierungsvertiefungen (302) zum Aufnehmen der jeweiligen Positionierungsstifte (301) der jeweiligen Lastvorrichtungen (200) versehen ist, oder wobei jede Lastvorrichtung (200) eine Positionierungsvertiefung in ihrer unteren Fläche (227) aufweist, während die obere Fläche (117) der Versorgungsvorrichtung (110) mit vorstehenden Positionierungsstiften zum Aufnehmen der jeweiligen Positionierungsvertiefungen der jeweiligen Lastvorrichtungen (200) versehen ist.

5. Kapazitives Ansteuerungssystem nach Anspruch 1, wobei ein Versatz der entsprechenden einen Empfängerelektrode (221) eine Abweichung der Überlappung mit der entsprechenden Übertragungselektrode (111) bewirkt, wodurch der Kapazitätswert des ersten Transferkondensators (31) geändert wird, und/oder wobei ein Versatz der entsprechenden einen Empfängerelektrode (221) eine Abweichung des Abstands zwischen der entsprechenden einen Empfängerelektrode (221) und der entsprechenden Übertragungselektrode (111) bewirkt, wodurch der Kapazitätswert des ersten Transferkondensators (31) geändert wird.

6. Kapazitives Ansteuerungssystem nach Anspruch 1, wobei mindestens eine der zwei Empfängerelektroden (221, 222) des Lastmoduls (200) mit Bezug auf die untere Fläche (227) des Lastmoduls (200) versetzbar ist.

7. Kapazitives Ansteuerungssystem nach Anspruch 1, wobei die andere Empfängerelektrode (222) kapazitiv an ihre entsprechende Übertragungselektrode (112) gekoppelt ist oder galvanisch an ihre entsprechende Übertragungselektrode (112) gekoppelt ist.

8. Kapazitives Ansteuerungssystem nach Anspruch 1, wobei die Versorgungsvorrichtung (110) angepasst ist, die Stromfrequenz (fP) des Stromgenerators (13) innerhalb eines Frequenzbereichs zwischen einer vordefinierten unteren Grenzfrequenz (fL) und einer vordefinierten oberen Grenzfrequenz (fH) zu wobbeln.

9. Verfahren zum Anpassen des Lichtausgangs einer Beleuchtungslastvorrichtung (200) in einem kapazitiven Ansteuerungssystem, wobei das kapazitive Ansteuerungssystem eine Versorgungsvorrichtung (110) umfasst, die eine obere Fläche (117) aufweist, wobei die Versorgungsvorrichtung (110) mindestens einen Satz Übertragungselektroden (111, 112) umfasst, die sich auf der oberen Fläche (117) befinden, und einen Stromgenerator (13), der zwei Ausgangsanschlüsse (14, 15) aufweist, die an jeweilige der Übertragungselektroden (111, 112) gekoppelt sind, wobei der Stromgenerator (13) angepasst ist, elektrischen Strom zu erzeugen, der an den Ausgangsanschlüssen (14, 15) eine Wechselspannung mit einer bestimmten Stromfrequenz (fP) aufweist, wobei das Verfahren den Schritt des Versetzens der Beleuchtungslastvorrichtung (200) mit Bezug auf die Versorgungsvorrichtung (110) umfasst, wobei die Beleuchtungslastvorrichtung (200) eine untere Fläche (227) aufweist, die zwei Empfängerelektroden (221, 222) aufweist, und ferner mindestens ein Lastelement (223) umfasst, das an die Empfängerelektroden (221, 222) gekoppelt ist, wobei das mindestens eine Lastelement ein Array von LEDs umfasst, die parallel zueinander und/oder in Reihe zueinander und/oder antiparallel zueinander angeordnet sind,
wobei die Beleuchtungslastvorrichtung (200) mit Bezug auf die Versorgungsvorrichtung (110) versetzt ist, während sie sich in einer Energietransferposition befindet, in der die untere Fläche (227) der Beleuchtungslastvorrichtung (200) zur oberen Fläche (117) der Versorgungsvorrichtung (110) gerichtet ist und in der mindestens eine der Übertragungselektroden (111) zusammen mit einer entsprechenden der Empfängerelektroden (221) einen ersten Transferkondensator (31) definiert,
wobei in der Energietransferposition ein Resonanzenergietransfer von der Versorgungsvorrichtung (110) zum Lastelement (223) erfolgt
und wobei der Versatz mindestens der entsprechenden einen Empfängerelektrode (221) mit Bezug auf die entsprechende Übertragungselektrode (111) eine Änderung des Kapazitätswerts des ersten Transferkondensators (31) ermöglicht,
**dadurch gekennzeichnet, dass** der Schritt des Versetzens der Beleuchtungslastvorrichtung (200) mit Bezug auf die Versorgungsvorrichtung (110) ein Rotieren der Beleuchtungslastvorrichtung (200) mit Bezug auf die Versorgungsvorrichtung (110) umfasst.

## Revendications

1. Système de pilotage capacitif (100), comprenant :
- un dispositif d'alimentation (110) ayant une surface haute (117), le dispositif d'alimentation (110) comprenant au moins un jeu d'électrodes de transmission (111, 112) situées au niveau de ladite surface haute (117), et un générateur d'électricité (13) ayant deux bornes de sortie (14, 15) couplées à des électrodes respectives parmi les électrodes de transmission (111, 112), dans lequel le générateur d'électricité (13) est adapté pour générer de l'énergie électrique ayant au niveau desdites bornes de sortie (14, 15) une tension alternative à une certaine fréquence de régime (fP) ;
- au moins un dispositif de charge (200) ayant une surface inférieure (227), le dispositif de charge (200) comprenant deux électrodes réceptrices (221, 222) au niveau de ladite surface inférieure (227) et au moins un organe de charge (223) couplé auxdites électrodes réceptrices (221, 222) ;
dans lequel le dispositif d'alimentation (110) et le dispositif de charge (200) ont une fonction de transfert d'énergie dans laquelle la surface inférieure (227) du dispositif de charge (200) est dirigée vers la surface haute (117) du dispositif d'alimentation (110) et dans lequel au moins l'une desdites électrodes de transmission (111) conjointement avec l'une correspondante desdites électrodes réceptrices (221) définit un premier condensateur de transfert (31) ;
dans lequel, dans la position de transfert d'énergie, un transfert d'énergie résonante a lieu du dispositif d'alimentation (110) à l'organe de charge (223) ;
et dans lequel, dans la position de transfert d'énergie, au moins ladite une électrode réceptrice correspondante (221) a une liberté de déplacement par rapport à l'électrode de transmission correspondante (111) pour permettre une rectification de la valeur de capacitance du premier condensateur de transfert (31),
**caractérisé en ce que** le dispositif de charge est un dispositif de charge d'illumination et ledit organe de charge comprend au moins une DEL,
dans lequel le dispositif de charge (200) a globalement une liberté de déplacement dans au moins une direction parallèle à la surface haute (117) du dispositif d'alimentation (110) pour permettre une rectification de la valeur de capacitance dudit premier condensateur de transfert (31), et
dans lequel le système de pilotage capacitif est pourvu de moyens de positionnement rotatifs (301, 302) qui sont adaptés pour empêcher un décalage des dispositifs de charge (200) respectifs le long de la surface haute (117) du dispositif d'alimentation (110) mais pour permettre un mouvement rotatif des dispositifs de charge (200) respectifs autour d'un axe de rotation perpendiculaire à la surface haute (117) du dispositif d'alimentation (110).

2. Système de pilotage capacitif selon la revendication 1, comprenant une pluralité de dispositifs de charge (200) agencés les uns à côté des autres sur la surface haute (117) du dispositif d'alimentation (110).

3. Système de pilotage capacitif selon la revendication 1, dans lequel l'organe de charge comprend un réseau de DEL agencées en parallèle les unes aux autres et/ou en série les unes aux autres et/ou en antiparallèle les unes aux autres.

4. Système de pilotage capacitif selon la revendication 1, dans lequel chaque dispositif de charge (200) comporte une goupille de serrage (301) dépassant de sa surface inférieure (227) alors que la surface haute (117) du dispositif d'alimentation (110) est pourvue d'évidements de serrage (302) destinés à recevoir les goupilles de serrage (301) respectives des dispositifs de charge (200) respectifs, ou dans lequel chaque dispositif de charge (200) comporte un évidement de serrage dans sa surface inférieure (227) alors que la surface haute (117) du dispositif d'alimentation (110) est pourvue de goupilles de serrage dépassantes destinées à recevoir les évidements de serrage respectifs des dispositifs de charge (200) respectifs.

5. Système de pilotage capacitif selon la revendication 1, dans lequel un déplacement de ladite une électrode réceptrice correspondante (221) effectue une variation de chevauchement avec l'électrode de transmission correspondante (111) rectifiant ainsi la valeur de capacitance dudit premier condensateur de transfert (31), et/ou dans lequel un déplacement de ladite une électrode réceptrice correspondante (221) effectue une variation de distance entre ladite une électrode réceptrice correspondante (221) et l'électrode de transmission correspondante (111) rectifiant ainsi la valeur de capacitance du premier condensateur de transfert (31).

6. Système de pilotage capacitif selon la revendication 1, dans lequel au moins l'une desdites deux électrodes réceptrices (221, 222) du module de charge (200) est déplaçable par rapport à la surface inférieure (227) du module de charge (200).

7. Système de pilotage capacitif selon la revendication 1, dans lequel l'autre électrode réceptrice (222) est couplée de manière capacitive à son électrode de transmission correspondante (112) ou est couplée de manière galvanique à son électrode de transmission correspondante (112).

8. Système de pilotage capacitif selon la revendication 1, dans lequel le dispositif d'alimentation (110) est adapté pour balayer la fréquence de régime (fP) du générateur d'électricité (13) dans une plage de fréquence entre une fréquence de borne inférieure prédéfinie (fL) et une fréquence de borne supérieure prédéfinie (fH).

9. Procédé d'adaptation de la sortie de lumière d'un dispositif de charge d'illumination (200) dans un système de pilotage capacitif, le système de pilotage capacitif comprenant un dispositif d'alimentation (110) ayant une surface haute (117), le dispositif d'alimentation (110) comprenant au moins un jeu d'électrodes de transmission (111, 112) situées au niveau de ladite surface haute (117), et un générateur d'électricité (13) ayant deux bornes de sortie (14, 15) couplées à des électrodes respectives parmi les électrodes de transmission (111, 112), dans lequel le générateur d'électricité (13) est adapté pour générer de l'énergie électrique ayant au niveau desdites bornes de sortie (14, 15) une tension alternative à une certaine fréquence de régime (fP),
le procédé comprenant l'étape de déplacement, par rapport au dispositif d'alimentation (110), du dispositif de charge d'illumination (200), le dispositif de charge d'illumination (200) ayant une surface inférieure (227) comprenant deux électrodes réceptrices (221, 222) et comprenant en outre au moins un organe de charge (223), couplé auxdites électrodes réceptrices (221, 222), le au moins un organe de charge comprenant un réseau de DEL agencées en parallèle les unes aux autres et/ou en série les unes aux autres et/ou en antiparallèle les unes aux autres,
dans lequel le dispositif de charge d'illumination (200) est déplacé par rapport au dispositif d'alimentation (110) alors que dans une position de transfert d'énergie dans laquelle la surface inférieure (227) du dispositif de charge d'illumination (200) est dirigée vers la surface haute (117) du dispositif d'alimentation (110) et dans laquelle au moins l'une desdites électrodes de transmission (111) conjointement avec l'une correspondante desdites électrodes réceptrices (221) définit un premier condensateur de transfert (31),
dans lequel, dans la position de transfert d'énergie, un transfert d'énergie résonante a lieu du dispositif d'alimentation (110) à l'organe de charge (223) ;
et dans lequel, le déplacement d'au moins ladite électrode réceptrice correspondante (221) par rapport à l'électrode de transmission correspondante (111) permet une rectification de la valeur de capacitance dudit premier condensateur de transfert (31),
**caractérisé en ce que** l'étape de déplacement du dispositif de charge d'illumination (200) par rapport au dispositif d'alimentation (110), comprend la rotation du dispositif de charge d'illumination (200) par rapport au dispositif d'alimentation (110).
